# EUROPÄISCHE PATENTSCHRIFT

(11) **EP 3 737 872 B1**
(45) Veröffentlichungstag und Bekanntmachung des Hinweises auf die Patenterteilung: **06.05.2026**
(21) Anmeldenummer: 19701301.4
(22) Anmeldetag: 11.01.2019
(51) Int. Cl.: F16D 65/12, F16D 65/84

(54) **VERFAHREN ZUM HERSTELLEN EINER BREMSSCHEIBE, BREMSSCHEIBE**
METHOD FOR PRODUCING A BRAKE DISC, AND BRAKE DISC
PROCÉDÉ DE FABRICATION D'UN DISQUE DE FREIN, DISQUE DE FREIN

(30) Priorität: 11.01.2018 DE 102018200321
(43) Veröffentlichungstag der Anmeldung: 18.11.2020
(73) Patentinhaber: Robert Bosch GmbH, 70442 Stuttgart (DE); Breyden GmbH, 35236 Breidenbach (DE)
(72) Erfinder: WAGNER, Jan-Claus, 35713 Eschenburg (DE); BARZEN, Ingo, 42899 Remscheid (DE); WU, Kangjian, 35041 Marburg (DE); PFEIFFER, Thomas, 35239 Steffenberg (DE); POTAPENKO, Ilja, 35236 Biedenkopf (DE)
(74) Vertreter: Clarenbach, Carl-Philipp
(86) Internationale Anmeldenummer: PCT/EP2019/050630
(87) Internationale Veröffentlichungsnummer: WO 2019/138035

(56) Entgegenhaltungen:
- EP-A1- 0 040 054
- DE-A1- 102013 221 737
- DE-A1- 102014 202 068
- DE-A1- 102014 205 666
- US-A1- 2008 142 319

## Beschreibung

Die Erfindung betrifft ein Verfahren zum Herstellen einer Bremsscheibe für ein Kraftfahrzeug, wobei eine Basisscheibe, insbesondere aus Gusseisen oder Aluminium, bereitgestellt und auf zumindest einer Oberfläche mit einer Korrosionsschutzbeschichtung versehen wird.

Weiterhin betrifft die Erfindung eine Bremsscheibe für ein Kraftfahrzeug, insbesondere hergestellt durch das oben genannte Verfahren, mit einer Basisscheibe, insbesondere aus Gusseisen oder Aluminium, und einer Korrosionsschutzbeschichtung auf zumindest einer Oberfläche der Basisscheibe.

### Stand der Technik

Bei herkömmlichen Bremsscheiben, insbesondere solchen, die eine Gusseisen-Basisscheibe aufweisen, werden zur Verringerung der Korrosionsneigung Oberflächen der Bremsscheibe mit einer Korrosionsschutzbeschichtung aus einem dazu geeigneten Lack versehen. Als bewährtes Lackmaterial hat sich beispielsweise Zinkstaublack herausgestellt. Die Lackierung wird üblicherweise mit Hilfe von Spritzdüsen ausgeführt, um die Anforderungen an eine gleichmäßige Lackdicke beziehungsweise Beschichtungsdicke zu erfüllen. Bei belüfteten Bremsscheiben, die Kühlkanäle aufweisen, ist es aufgrund von Abschottungen und Hinterschneidungen nicht ohne Weiteres möglich, alle Oberflächen im jeweiligen Kühlkanal gleichmäßig dick zu beschichten. Dies kann dazu führen, dass vereinzelt Stellen unlackiert verbleiben.

Aus den Offenlegungsschrift DE 10 2013 221 737 A1, DE 10 2014 202 068 A1 und DE 10 2014 205 666 A1 sind bereits Verfahren der gattungsgemäßen Art bekannt.

### Offenbarung der Erfindung

Das erfindungsgemäße Verfahren mit den Merkmalen des Anspruchs 1 hat den Vorteil, dass auch ein Kühlkanal durch eine Korrosionsschutzbeschichtung sicher vor Korrosionsneigung geschützt wird. Insbesondere wird erreicht, dass die zu beschichtende Oberfläche der Bremsscheibe insgesamt mit einer gleichmäßigen Schichtdicke versehen wird. Hierzu ist erfindungsgemäß vorgesehen, dass die Korrosionsschutzbeschichtung durch ein nasschemisches oder galvanisches Verfahren aufgebracht wird. Hierbei wird auf das Einführen von Spritzdüsen oder dergleichen in oder an einen Kühlkanal verzichtet. Stattdessen werden die gewünschten Oberflächen der Bremsscheibe insgesamt mit einem Beschichtungsmaterial beaufschlagt, das durch die chemische oder galvanische Abscheidung auf der zumindest einen Oberfläche der Bremsscheibe gleichmäßig die gewünschte Korrosionsschutzbeschichtung erzeugt. Hierdurch ist auf einfache und kostengünstige Art und Weise sichergestellt, dass die Korrosionsschutzbeschichtung gleichmäßig hergestellt wird.

Weiterhin ist bevorzugt vorgesehen, dass als Korrosionsschutzbeschichtung chemischer oder galvanischer Nickel aufgebracht wird. Die Nickelbeschichtung hat sich bereits als verlässlich und verschleißbeständig herausgestellt.

Alternativ wird bevorzugt als Korrosionsschutzbeschichtung Chrom oder eine Legierung, insbesondere eine Chrom-Legierung, aufgebracht. Auch hierdurch ist durch das chemische oder galvanische Beschichtungsverfahren ein sicherer Korrosionsschutz für die Bremsscheibe geboten.

Weiterhin ist erfindungsgemäß vorgesehen, dass die Bremsscheibe mit zumindest einem Kühlkanal versehen wird, und dass nur der zumindest eine Kühlkanal mit der Korrosionsschutzbeschichtung versehen wird. Hierdurch wird erreicht, dass andere Oberflächen der Bremsscheibe, insbesondere solche, die als Bremsfläche dienen, oder beispielsweise auch ein Bremsscheibentopf der Bremsscheibe, nicht mit dem gewählten Material der Korrosionsschutzbeschichtung beaufschlagt oder beschichtet werden.

Weiterhin ist bevorzugt vorgesehen, dass zumindest eine Bremsfläche und ein Bremstopf der Basisscheibe oder der zumindest eine Kühlkanal vor dem Beschichtungsvorgang nach außen abgedichtet werden. Hierdurch wird gewährleistet, dass während des Beschichtungsverfahrens andere Oberflächen der Basisscheiben außerhalb des zumindest einen Kühlkanals nicht beaufschlagt und damit auch nicht beschichtet werden. Dadurch werden die oben genannten Vorteile auf einfache Art und Weise erreicht.

Die erfindungsgemäße Bremsscheibe mit den Merkmalen des Anspruchs 5 zeichnet sich dadurch aus, dass zumindest eine Oberfläche der Basisscheibe eine nass-chemische oder galvanische Korrosionsschutzbeschichtung aufweist. Es ergeben sich hierdurch die bereits genannten Vorteile. Weitere Vorteile und bevorzugte Merkmale und Merkmalskombinationen ergeben sich insbesondere aus dem zuvor Beschriebenen sowie aus den Ansprüchen. Im Folgenden soll die Erfindung anhand der Zeichnung näher erläutert werden. Dazu zeigen:
- Figur 1: eine vorteilhafte Bremsscheibe in einer vereinfachten Darstellung und
- Figur 2: ein vorteilhaftes Verfahren zum Herstellen der Bremsscheibe.

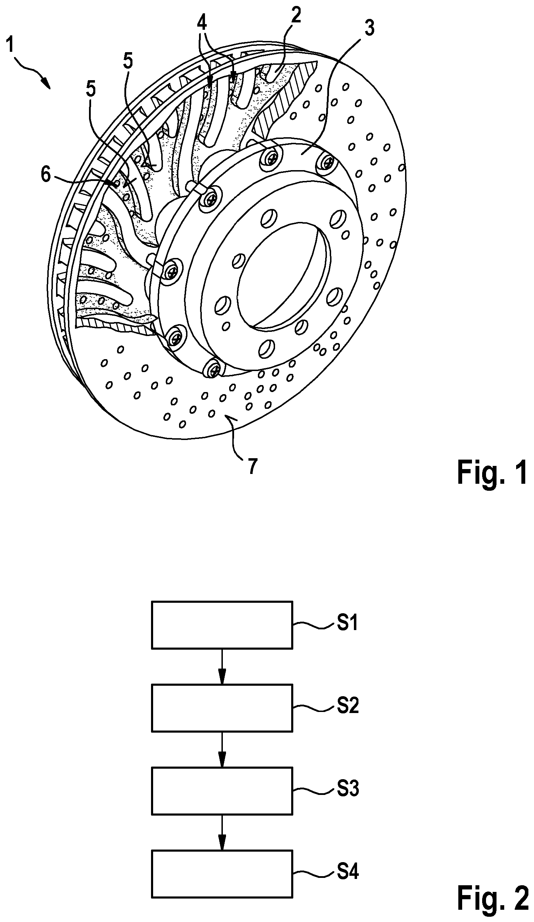

Figur 1 zeigt eine vorteilhafte Bremsscheibe 1 in einer vereinfachten perspektivischen Teil-Schnittdarstellung. Die Bremsscheibe 1 weist eine kreisringförmige Basisscheibe 2 auf, an welcher ein Bremsscheibentopf 3 befestigt ist, der alternativ auch einstückig mit der Basisscheibe 2 ausgebildet sein kann.

Die Basisscheibe 2 weist eine Vielzahl von integrierten Kühlkanälen 4 auf, die sich vom Innenumfang bis zum Außenumfang der Bremsscheibe 2 erstrecken. Dabei verlaufen die Kühlkanäle 4 im Wesentlichen abweichend von einer radialen Erstreckung, insbesondere gekrümmt von innen nach außen. Benachbarte Kühlkanäle 4 sind dabei außerdem unterschiedlich gestaltet.

Die Basisscheibe 2 ist vorliegend aus Gusseisen oder Aluminium, gegebenenfalls mit einer Verschleißschutzschicht gefertigt und weist zur Vermeidung von Korrosion insbesondere im Bereich der Kühlkanäle 4 an Oberflächen 5 der Kühlkanäle 4 eine Beschichtung 6 auf. Insbesondere sind alle dem Kühlkanal 4 zugewandten Oberflächen der Bremsscheibe 1 mit der Korrosionsschutzbeschichtung 6 versehen.

Zum Aufbringen der Korrosionsschutzbeschichtung 6 wird das in Figur 2 vereinfachte dargestellte Verfahren angewendet. In einem ersten Schritt S1 wird die Basisscheibe 2 mit ihren ausgebildeten Kühlkanälen 4 bereitgestellt. In einem darauffolgenden Schritt S2 werden die Kühlkanäle 4 mit Hilfe von Dichtungselementen nach außen abgedichtet. Dazu wird beispielsweise ein Dichtungsring auf der Basisscheibe 2 an ihrem Außenumfang angebracht, der sämtliche Ausgangsöffnungen der Kühlkanäle 4 am Außenumfang überdeckt und abdichtet. Entsprechend wird beispielsweise am Innenumfang der Basisscheibe 2 vorgegangen.

Anschließend werden in einem darauffolgenden Schritt S3 durch ein nass-chemisches oder ein galvanisches Verfahren die Oberflächen 5 der Kühlkanäle 4 mit der Korrosionsschutzbeschichtung 6 versehen. Dazu wird zunächst eine Flüssigkeit in die Kühlkanäle 4 eingeführt, bis diese vollständig mit der Flüssigkeit ausgefüllt sind.

Gemäß einem alternativen Ausführungsbeispiel werden nicht die Kühlkanäle 4 nach außen abgedichtet und die Flüssigkeit in die Kühlkanäle eingefüllt, sondern die Bremsfläche 7 und der Bremsscheibentopf 3 abgedichtet oder mit einer Schutzschicht bedeckt, sodass die Basisscheibe 2 insgesamt in die Flüssigkeit eintauchbar ist, wodurch die Kühlkanäle 4 insgesamt durchflutet werden und aufgrund der Schutzschicht Bremsfläche 7 und Bremstopf 3 nicht mit der Flüssigkeit in Berührung kommen, sodass im Endeffekt nur die Kühlkanäle 4 beziehungsweise deren Oberflächen 5 beaufschlagt und wie gewünscht beschichtet werden.

Bei der Flüssigkeit handelt es sich beispielsweise um ein elektrolytisches Bad für die galvanische Aufbringung der Korrosionsschutzbeschichtung oder um ein gas- oder dampfförmiges Medium für die nass-chemische Beschichtung verwendet. Für die galvanische Beschichtung wird beispielsweise Nickel in die Flüssigkeit eingebracht und eine elektrische Spannung zwischen dem Nickel und der Basisscheibe eingestellt, so dass die Metallionen des Nickels sich von der Nickelelektrode ablösen und auf der Basisscheibe anlagern. Dadurch werden die Oberflächen 5 in dem jeweiligen Kühlkanal 4 gleichmäßig mit dem Nickel beschichtet. Anstelle von Nickel können auch andere galvanisch geeignete Materialien verwendet werden, wie beispielsweise Chrom oder eine Legierung.

Für die Durchführung eines nass-chemischen Beschichtungsverfahrens wird - beispielsweise chemisch - Nickel verwendet.

Aufgrund der Durchströmung der Kühlkanäle 4 mit den für den Beschichtungsprozess notwendigen Chemikalien wird jede Stelle im jeweiligen Kühlkanal 4 sicher erreicht und beschichtet. Dadurch ist eine gleichmäßige Beschichtung der Oberflächen 5 im jeweiligen Kühlmittelkanal 4 gewährleistet. Gleichzeitig wird gewährleistet, dass außenliegende Oberflächen der Basisscheibe 2, wie beispielsweise die Bremsflächen 7 nicht mit der Korrosionsschutzbeschichtung versehen werden.

Nach der Durchführung des jeweiligen Beschichtungsverfahrens werden die Dichtungselemente oder Schutzschichten wieder entfernt und in einem Schritt S4 die fertige Bremsscheibe 1 zur Verfügung gestellt.

Durch die vorteilhafte galvanische Nickel-Beschichtung für die Korrosionsschutzbeschichtung werden eine ausgezeichnete Haftung und Konturtreue auf der Gussscheiben-Basisscheibe 2 erreicht. Auch dicke Schichten ohne erkennbare Poren können mit Schichtdicken im Bereich mehrerer 10 *µm* hergestellt werden. Aufgrund einer Spannungsarmut sind auch noch größere Schichtdicken möglich. An der Oberfläche der Korrosionsschutzbeschichtung, insbesondere aus Nickel, bildet sich unmittelbar nach der Abscheidung eine sogenannte Passivierungsschicht, die als Diffusionsbarriere eine weitere Veränderung durch Korrosionsangriff sicher verhindert und dadurch die Bremsscheibe 1 sicher vor Korrosion schützt. Durch die Dichtungselemente wird der Durchfluss der Chemikalien auf den jeweiligen Kühlkanal beschränkt und somit eine unerwünschte Schichtbildung auf der Bremsfläche 7 und auch auf dem Bremsscheibentopf 3 verhindert.

Auch bei einer chemischen Beschichtung der Kühlkanäle 4 können Schichtdicken von bis zu 80 *µm* hergestellt werden, wodurch ein sicherer Korrosionsschutz gewährleistet ist.

Durch den vorteilhaften Korrosionsschutz mittels der Korrosionsschutzbeschichtung wird die Lebensdauer der Bremsscheibe 1 erhöht. Dies ist insbesondere auch dann von Bedeutung, wenn die Bremsscheibe 1 verhältnismäßig wenig zum Bremsen genutzt wird. Dies ist beispielsweise bei Elektrofahrzeugen oder Hybrid-Fahrzeugen der Fall, die durch einen rekuperativen Betrieb einer elektrischen Antriebsmaschine weniger verschleißen als Kraftfahrzeuge, die nur eine herkömmliche Brennkraftmaschine als Antriebseinrichtung zum Beschleunigen und nur ein Reibbremssystem zum Verzögern des Kraftfahrzeugs aufweisen.

## Patentansprüche

1. Verfahren zum Herstellen einer Bremsscheibe (1) für ein Kraftfahrzeug, wobei eine Basisscheibe (2), insbesondere aus Gusseisen oder Aluminium, bereitgestellt und mit einer Korrosionsschutzbeschichtung (6) versehen wird, wobei die Korrosionsschutzbeschichtung (6) durch ein nass-chemisches oder galvanisches Verfahren aufgebracht wird, **dadurch gekennzeichnet, dass** die Basisscheibe (2) mit zumindest einem Kühlkanal (4) versehen wird, und dass nur der zumindest eine Kühlkanal (4) mit der Korrosionsschutzbeschichtung (6) versehen wird.

2. Verfahren nach Anspruch 1, **dadurch gekennzeichnet, dass** als Korrosionsschutzbeschichtung (6) chemischer oder galvanischer Nickel aufgebracht wird.

3. Verfahren nach Anspruch 1, **dadurch gekennzeichnet, dass** als Korrosionsschutzbeschichtung (6) Chrom oder eine Legierung aufgebracht wird.

4. Verfahren nach einem der vorhergehenden Ansprüche, **dadurch gekennzeichnet, dass** zumindest eine Bremsfläche (6) und ein Bremsscheibentopf (3) vor dem Beschichtungsvorgang abgedichtet werden.

5. Bremsscheibe (1) für ein Kraftfahrzeug, insbesondere hergestellt nach einem Verfahren nach einem der Ansprüche 1 bis 4, mit einer Basisscheibe (2), insbesondere aus Gusseisen oder Aluminium, und mit einer Korrosionsschutzbeschichtung (6) auf zumindest einer Oberfläche (5) der Basisscheibe (2), wobei die Korrosionsschutzbeschichtung (6) eine nass-chemische oder galvanische Beschichtung ist, die Basisscheibe (2) zumindest einen Kühlkanal (4) aufweist, und dass nur der zumindest eine Kühlkanal (4) mit der Korrosionsschutzbeschichtung (6) versehen ist.

## Claims

1. Method for producing a brake disc (1) for a motor vehicle, wherein a base disc (2), particularly made of cast iron or aluminium, is provided and equipped with an anti-corrosion coating (6), wherein the anti-corrosion coating (6) is applied by a wet chemical or galvanic method, **characterised in that** the base disc (2) is equipped with at least one cooling duct (4), and that only the at least one cooling duct (4) is equipped with the anti-corrosion coating (6).

2. Method according to claim 1, **characterised in that** chemical or galvanic nickel is applied as the anti-corrosion coating (6).

3. Method according to claim 1, **characterised in that** chromium or an alloy is applied as the anti-corrosion coating (6).

4. Method according to one of the preceding claims, **characterised in that** at least one brake surface (6) and a brake disc housing (3) are sealed prior to the coating process.

5. Brake disc (1) for a motor vehicle, particularly produced by a method according to any one of claims 1 to 4, with a base disc (2), particularly made of cast iron or aluminium, and with an anti-corrosion coating (6) on at least one surface (5) of the base disc (2), wherein the anti-corrosion coating (6) is a wet chemical or galvanic coating, the base disc (2) comprises at least one cooling duct (4), and only the at least one cooling duct (4) is equipped with the anti-corrosion coating (6).

## Revendications

1. Procédé de fabrication d'un disque de frein (1) pour un véhicule automobile, dans lequel un disque de base (2), en particulier en fonte ou en aluminium, est fourni et pourvu d'un revêtement anticorrosion (6), dans lequel le revêtement anticorrosion (6) est appliqué par un procédé chimique par voie humide ou galvanique, **caractérisé en ce que** le disque de base (2) est pourvu d'au moins un canal de refroidissement (4) et **en ce que** seul l'au moins un canal de refroidissement (4) est pourvu du revêtement anticorrosion (6).

2. Procédé selon la revendication 1, **caractérisé en ce que** du nickel chimique ou galvanique est appliqué comme revêtement anticorrosion (6).

3. Procédé selon la revendication 1, **caractérisé en ce que** du chrome ou un alliage est appliqué comme revêtement anticorrosion (6).

4. Procédé selon l'une quelconque des revendications précédentes, **caractérisé en ce qu'** au moins une surface de freinage (6) et une cloche de disque de frein (3) sont scellés avant le processus de revêtement.

5. Disque de frein (1) pour un véhicule automobile, en particulier fabriqué selon un procédé selon l'une des revendications 1 à 4, avec un disque de base (2), en particulier en fonte ou en aluminium, et avec un revêtement anticorrosion (6) sur au moins une surface (5) du disque de base (2), dans lequel le revêtement anticorrosion (6) est un revêtement chimique par voie humide ou galvanique, le disque de base (2) présente au moins un canal de refroidissement (4), et seul l'au moins un canal de refroidissement (4) est pourvu du revêtement anticorrosion (6).
